# EUROPEAN PATENT SPECIFICATION

(11) **EP 4 465 486 B1**
(45) Date of publication and mention of the grant of the patent: **11.11.2026**
(21) Application number: 23174386.5
(22) Date of filing: 19.05.2023
(51) Int. Cl.: H02K 1/14, H02K 1/18, H02K 15/02

(54) **STATOR ASSEMBLY**
STATORANORDNUNG
ENSEMBLE STATOR

(43) Date of publication of application: 20.11.2024
(73) Proprietor: Hamilton Sundstrand Corporation, Charlotte, NC 28217 (US)
(72) Inventor: POPESCU, Andrei, Coventry, CV56HQ (GB); HARRIS, Paul Charles, Leighton Buzzard, LU7 2SY (GB); DAY, Aoron Christopher, Borough Green, Sevenoaks, TN15 8QT (GB); DURAIRAJ, Thilak Raj, Shirley, Solihull, B90 3EE (GB)
(74) Representative: Dehns

(56) References cited:
- WO-A1-2021/051702
- CN-A- 103 138 422
- CN-A- 105 515 230
- JP-B2- 5 805 330
- US-A1- 2023 038 547

## Description

### FIELD OF TECHNOLOGY

The examples described herein relate to a stator assembly for an electrical machine, in particular a stator assembly that is formed from individually manufactured stator teeth.

### BACKGROUND OF THE INVENTION

Electric generators or motors comprise a stator and a rotor. A stator may comprise multiple stator teeth on which stator windings are mounted. The stator teeth may be manufactured individually and joined together in the assembly process to prevent wastage of the materials used to form each stator tooth. However, it is difficult to align the individual stator teeth, in order to allow for adequate transfer of electromagnetic flux and heat, without expensive machining of the stator teeth.

There is therefore a need for an improved stator assembly in which the stator teeth are formed to allow the stator assembly to be easily aligned and secure once formed, while also being cost-effective.

CN 105 515 230 A discloses a stator for a generator including a plurality of stator units. The stator units include a core module with a yoke and a fixed arrangement. At least one tooth portion on the yoke is provided with a winding.

US 2023/038547 A1 discloses a stator for an electric motor formed of individual teeth. Each tooth is arranged in a ring around an axis of rotation of the electric motor and is interconnected in the circumferential direction.

WO 2021/051702 A1 discloses a fastening structure for the inner stator of a motor formed from a plurality of stator units connected in the circumferential direction.

JP 5 805330 B2 discloses a rotating electrical machine and method for manufacturing same.

### SUMMARY OF THE INVENTION

There is provided a clamping mechanism for a stator assembly, as claimed in claim 1.

There is provided a stator assembly for an electrical machine, as claimed in claim 2, comprising a plurality of clamping mechanisms according to claim 1.

There is provided a method of assembling a stator assembly for an electrical machine as claimed in claim 14.

It will be appreciated that all of the features described herein relating to the stator assembly apply equally to the method of manufacturing and assembling the stator, and vice versa.

The stator assembly, of an electrical machine, which extends azimuthally (e.g. fully circumferentially) around a longitudinal axis, has a plurality of stator teeth, on which windings of an electromagnetic coil can be mounted. The stator assembly may be substantially rotationally symmetric about its longitudinal axis. In one example, the stator assembly is generally cylindrical, e.g. with the cylindrical axis equating to the longitudinal axis.

In some examples, the stator assembly may be arranged to be used with an inner rotor and therefore may comprise an outer stator. In other examples, the stator assembly may be arranged to be used with an outer rotor and therefore may comprise an inner stator.

The plurality of stator teeth are formed individually, so they are not integral with or connected to one another. In some examples, each stator tooth is entirely separate and mechanically isolated from each of the other stator teeth when manufactured. Once formed, the plurality of stator teeth are arranged such that they are spaced (e.g. evenly) azimuthally (from each other) to form the stator assembly, i.e. stator tooth is at a different azimuthal position to each of the other stator tooth.

In some examples, the stator teeth are stamped from the same sheet of metal, where each stator tooth is spaced physically apart from all other stator teeth. This may allow all stator teeth to be formed at the same time whilst still being formed individually.

In some examples the plurality of stator teeth project radially inwards (e.g. from a stator housing arranged radially outwards of the stator teeth). This may be suitable for an outer stator arrangement (e.g. to be used with an inner rotor). In some examples the plurality of stator teeth project radially outwards (e.g. from a stator housing arranged radially inwards of the stator teeth). This may be suitable for an inner stator arrangement (e.g. to be used with an outer rotor).

In some examples the stator housing comprises an electronics housing for the electronics of the motor. In some examples the stator housing comprises a cover extending circumferentially around the outer circumference of the plurality of stator teeth. This may protect the stator teeth and associated electronics from damage (e.g. corrosion and/or foreign object damage).

Each individual stator tooth is stamped separately, then assembled to form the stator assembly. This reduces the material loss of sheet metal in comparison to cutting out a large torus of a plurality of already joined stator teeth where the centre-cut of sheet metal would be wasted. This may be advantageous due to the material typically being used for stator teeth being a high cost metal (e.g. cobalt and iron alloys), and hence may reduce the overall costs of manufacturing the stator assembly.

This is especially applicable for large diameter stators, which may generate significantly less waste when the stator teeth are stamped individually. Furthermore, as many individual teeth may be stamped simultaneously, there may not be a significant difference in the time taken to manufacture the stator teeth.

In some examples, each stator tooth may be arranged for mounting a winding of an electromagnetic coil (or portion thereof). In an example, the stator windings may be wound around the (e.g. each) stator tooth prior to the assembly of the main stator core. Arranging the stator windings before assembling the main stator core may allow the windings to be wound more tightly around individual teeth. In some examples, tighter windings may cause larger air gaps to be present between adjacent stator teeth upon assembly. The presence of air gaps may prevent overheating of the motor, and therefore larger air gaps may cool the stator assembly more efficiently.

In an example, the winding process may be carried out automatically. This may make the manufacturing and assembly process both cheaper and faster.

It is advantageous to construct the stator assembly from individual stator teeth. If part of the stator assembly is damaged (e.g. during assembly or use), instead of the entire stator core being replaced, only the one or more individual broken stator teeth may be removed and replaced. This may simplify and lower the cost of repair of individual stator windings caused by foreign object damage in the air-cooling process and may increase the lifetime of the motor.

The (e.g. each) stator tooth extends in an axial direction (parallel to the axis of the stator assembly). In some examples the stator tooth or each of the plurality of stator teeth has a substantially constant cross section (in a plane perpendicular to the axis of the stator assembly).

The (e.g. each) stator tooth extends radially, with an end radially proximal to the centre of the stator assembly, and another end radially distal to the centre of the stator assembly. The (e.g. each) stator tooth comprises an upper body portion extending radially towards the distal end of the stator tooth, and a lower body portion extending radially towards the proximal end of the stator tooth.

In some examples, the upper body portion of the (e.g. each) stator tooth may be arranged for mounting a winding of an electromagnetic coil (or portion thereof).

In some examples, the (e.g. each) stator tooth further comprises an upper flange at the end distal from the centre of the stator assembly (e.g. distal from the central flange), wherein the flange projects azimuthally from the stator tooth. The upper flange may be arranged to prevent movement of the stator windings radially outwards during assembly and use of the stator, as without the upper flange the windings may be able to slide off the distal end of the stator tooth.

Furthermore, the central flange may help to prevent movement of the windings radially inwards during assembly and use of the stator. By holding the windings in a stable position, the windings may be resistant to mechanical vibrations which may occur over the lifetime of the stator, which may improve its performance and increase its lifetime.

The central flange extends azimuthally from the stator tooth, and is arranged to engage with an identical, adjacent tooth. Therefore, when the plurality of stator teeth are arranged such that they are spaced azimuthally to form the stator assembly, each central flange of the stator teeth engages with the adjacent central flange.

In some examples, the central flanges are at different radial positions on either side of the stator tooth, so that radial facing surfaces of the central flanges engage with each other. The engagement between the central flanges provides friction between pairs of adjacent stator teeth, which may help to hold the stator assembly together by preventing movement of the stator teeth.

Furthermore, in addition to helping hold the stator assembly together, the central flange allows for pairs of adjacent stator teeth to be substantially in contact with each other. This allows for the transfer of the electromagnetic flux needed for the stator assembly to function, despite the stator teeth being manufactured separately.

The clamping mechanism is arranged to exert a radially inward force on the respective adjacent pair of stator teeth, such that when a plurality of clamping mechanisms exert a radially inward force in the stator assembly it may prevent radial and axial movement of the individual stator teeth relative to each other. Using a clamping mechanism between each pair of adjacent stator teeth may allow for more reliable construction of the stator assembly using individually formed stator teeth, as the stator assembly may not solely be held together using friction between the adjacent stator teeth.

In some examples, the radially innermost (proximal) end of (e.g. the lower body portion of) the (e.g. each) stator tooth comprises a lower flange, e.g. extending azimuthally, e.g. from both sides of (e.g. the lower body portion of) the (e.g. each) stator tooth. In an example, the lower flange(s), e.g. of each adjacent pair of stator teeth, is arranged to engage with the respective clamping mechanism. In this example, the clamping mechanism exerts a radially inward force on the lower flanges of the adjacent pair of stator teeth, which may help to draw the stator teeth radially inward and hold them in the desired position.

In some examples, the stator teeth are arranged to surround a stator body, e.g. a heat sink. In an example, the stator teeth are attached to the stator body, e.g. by clamping or gluing. This may allow for rapid alignment of the stator teeth, which may help improve the efficiency of assembly.

In some examples, the (e.g. each) clamping mechanism comprises a clamping element arranged to extend longitudinally along the axis of the stator assembly. In some examples, the (e.g. each) clamping element has the same axial extent as the respective stator tooth.

In an example, the (e.g. each) clamping element is arranged to exert a force azimuthally on the inside faces of the lower body portions of the respective adjacent pair of stator teeth, and a force radially inwards on the lower flanges of the respective adjacent pair of stator teeth.

In some examples, the (e.g. each) clamping mechanism comprises a clamping rod, wherein the clamping rod extends longitudinally along the axis of the stator assembly. In some examples, the clamping rod extends coaxially within the clamping element.

The (e.g. each) clamping mechanism comprises at least one (e.g. a pair of) compression element(s). In some examples, each of the pair of compression elements is arranged to surround opposite ends of the respective clamping rod.

Each compression element has a frustoconical shape. In other examples, the (e.g. each) compression element is angled with respect to the axis of the stator assembly.

In some examples, the compression elements are arranged to transmit an axially inward force exerted on a face of the stator assembly to the respective clamping rod and hence the respective clamping element.

In an example, the curved face of the (e.g. each) compression element transmits the axially inward force as a radially and azimuthally outward force on the respective clamping element. The at least one compression element is arranged to convert an axially inward force exerted on the at least one compression element into the radially inward force on the respective adjacent pair of stator teeth.

In an example, the clamping element exerts a force azimuthally on the inner faces of the lower body portions of the respective adjacent pair of stator teeth, and a force radially inwards on the lower flanges of the respective adjacent pair of stator teeth. The clamping mechanism may allow for improved aligning and maintaining of the position of the teeth.

In some examples, the axial extent of the (e.g. each) clamping mechanism is greater than the axial extent of the stator teeth.

In some examples, the stator assembly comprises a plurality of nuts, wherein the (e.g. each) nut is arranged to engage with a respective clamping mechanism to increase the axially inward force when the nut is tightened. Thus, the method may comprise tightening a nut at the end of each clamping mechanism so to convert an axially inward force on the clamping mechanism into the radially inward force. Each nut may be arranged at the end of the respective clamping mechanism, and in an example the nut may be arranged externally to the stator teeth.

In some examples, each nut is arranged externally to the heat sink, such that each clamping mechanism and hence respective pair of adjacent stator teeth are clamped to the heat sink.

In some examples, the heat sink has a plurality of grooves complementary to the shape of the proximal end of the stator tooth, such that the heat sink is arranged to engage with the plurality of stator teeth.

In an example, the (e.g. each) pair of adjacent stator teeth is arranged to be moved radially inwards when the respective nut is tightened. Therefore, tightening the plurality of nuts may move the stator teeth closer together. This may make the construction of the stator assembly more secure, as there may be more friction between adjacent stator teeth.

In some examples, the stator assembly comprises a plurality of plates, wherein the plurality of plates are arranged at an end face of the stator assembly. In some examples, the (e.g. each) plate is arranged to connect respective adjacent pairs of clamping mechanisms.

In some examples, the (e.g. each) plate is arranged between the respective clamping mechanism and its respective nut. This may prevent relative axial movement of the stator teeth in and out of the stator assembly, and may make the stator assembly more secure.

The ends of the (e.g. each) plate may be bent such that they engage with the edges of the respective nuts, which may help to prevent unscrewing of the nuts and may further secure the stator assembly.

This clamping mechanism may be advantageous in its own right and therefore, there is also provided a clamping mechanism for a stator assembly as claimed in claim 1.

The central flange of the (e.g. each) stator tooth comprises a first portion extending azimuthally in one direction from the body portion of the stator tooth, and a second portion extending azimuthally in a direction opposite to that of the first portion. The central flange may be any shape which allows for the central flange of a stator tooth to engage with the central flange of an adjacent stator tooth, to facilitate flux transfer between the stator teeth.

In some examples, the shape of the first portion of the central flange of the stator tooth is complementary to the shape of the second portion of the central flange of an adjacent stator tooth. Thus, in some examples, the shape of the central flange on one side of the body portion is complementary to the shape of the central flange on the opposite side of the body portion of an adjacent stator tooth.

In some examples, a first manufacturing tolerance of a first face of the central flange perpendicular to the body portion is less than the manufacturing tolerance of a second face of the central flange parallel to the body portion.

If the manufacturing tolerance of the second face is greater than first face, the surface of the second face may not need to be machined after the stator tooth is stamped.

This may reduce the manufacturing costs of the individual stator teeth by reducing the overall amount of machining required.

In some examples, the shape of the central flange comprises a plurality of steps when viewed from a radial cross-section of the stator assembly. This shape is favourable as it may increase the surface area of contact between radial facing surfaces of adjacent stator teeth, which may facilitate the transfer of electromagnetic flux and heat radially throughout the stator assembly and therefore help to improve the efficiency and performance of the stator assembly.

In some examples, a first manufacturing tolerance of a first face of the plurality of steps perpendicular to the body portion is less than a second manufacturing tolerance of a second face of the plurality of steps parallel to the body portion.

Due to the differences in manufacturing tolerances of the faces of the central flange, when the stator teeth are assembled, there may be a small gap(s) extending long the axis of the stator assembly in the radial plane between adjacent (e.g. pairs of) stator teeth. The small gap may allow for azimuthal movement of the stator teeth even once the stator is assembled, such that the during assembly the azimuthal positioning of the stator teeth may be less precise than if there were no small gap. This may help improve the speed and ease of assembling the stator teeth.

The small gap may also allow for small variations in the size of each stator tooth. Small variations are likely to occur during the stamping process which, without allowing for a small gap between the teeth, may prevent the central flanges of adjacent stator teeth from engaging with each other.

In some examples, the azimuthal extent (e.g. width) of the (e.g. each) central flange is substantially less than the radial extent (e.g. length) of the body portion.

In some examples, the body portion of each stator tooth is tapered at substantially the same angle, e.g. the body portion is narrower at the proximal end than it is at the distal end, or the body portion is narrower at the distal end than the proximal end. In some examples, the upper body portion of each stator tooth may be tapered, (e.g. the upper body portion is narrower at its distal end than at the end proximal to the central flange), and the lower body portion of each stator tooth is not tapered.

In some examples, when assembled the gap between adjacent stator teeth is substantially uniform such that the windings mounted on adjacent pairs of stator teeth may be parallel. A uniform gap between adjacent pairs of stator teeth may allow for more uniform air flow which may improve cooling of the stator assembly.

In some examples, when assembled the gap between the lower body portions of adjacent stator teeth may be parallel, such that the positioning of the clamping mechanisms may be eased.

In some examples, the upper body portion of each stator tooth is tapered substantially at the same angle. In some examples, the lower body portion of each stator tooth is tapered substantially at the same angle. This may help the gaps between adjacent stator teeth to be uniform. In the case of the lower body portion of each stator tooth, this may allow for an increased radially inward force to be exerted on the stator teeth by the clamping mechanisms.

In another example, cooling pipes are inserted between the upper body portions of adjacent pairs of stator teeth. The placement of the cooling pipes may be assisted by the uniform air gaps.

The tapered body portion of each stator tooth may also push the windings radially inwards, which may increase the tension in the windings and help to hold them in place and make the stator assembly more resistant to mechanical vibrations.

Additionally, movement of the windings radially inwards exposes the distal end of the stator tooth, which may increase the surface of the stator tooth which is exposed to the air. This may improve the cooling of the stator teeth, especially given the distal ends of the stator teeth are likely to be warmer as this is where the transfer of electromagnetic flux from the stator to the rotor and vice versa may take place.

### BRIEF DESCRIPTION OF THE DRAWINGS

One or more non-limiting examples will now be described, by way of example only, and with reference to the accompanying figures in which:
Figure 1 shows a perspective view of a stator for an electrical machine;
Figure 2a shows an end-on view of a first stator tooth;
Figure 2b shows an end-on view of a second stator tooth;
Figure 2c shows a perspective view of the stator tooth shown in Figure 2a;
Figure 3a shows an end-on view of a plurality of stator teeth of the type shown in Figure 2a;
Figure 3b shows an end-on view of a plurality of stator teeth of the type shown in Figure 2b;
Figure 4 shows a perspective view of the stator tooth shown in Figure 2c with windings included;
Figure 5a shows a perspective view of a radial cross-section of an enlarged section of the stator shown in Figure 4;
Figure 5b shows an end-on view of an enlarged section of the stator shown in Figure 4;
Figure 6 shows an enlarged section of the stator shown in Figure 5a;
Figure 7 shows a perspective view of the clamping components shown in Figure 6;
Figure 8 shows an axial cross-section of the stator shown in Figure 6; and
Figure 9 shows a perspective view of an enlarged section of the stator shown in Figure 5b.

### DETAILED DESCRIPTION OF THE INVENTION

The examples described herein may be used for the assembly of a stator from individual stator teeth for use with an outer rotor in an electric motor. Other applications where an inner or outer rotor is used are, however, also envisaged and the examples are not limited to this.

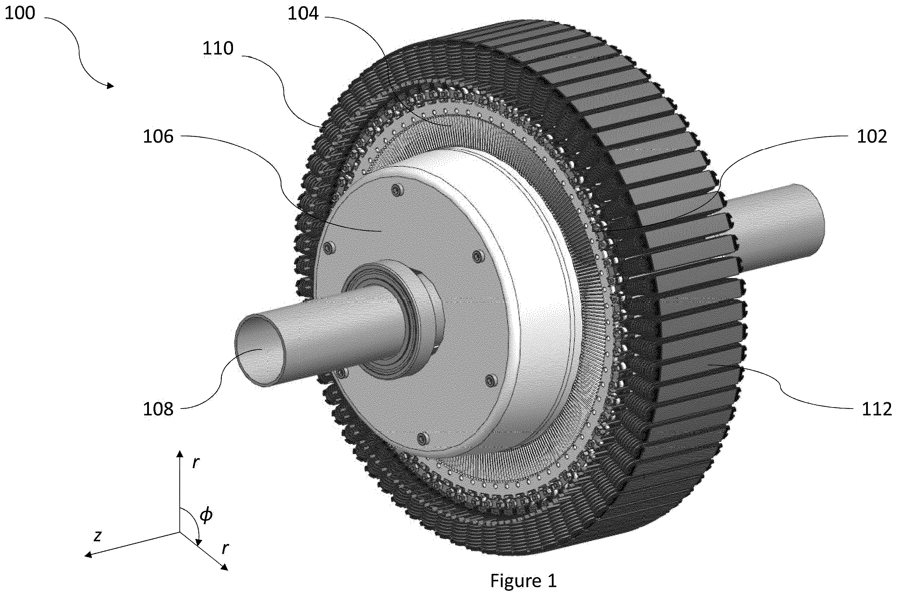

Figure 1 shows a perspective view of a stator 100 designed to be operated with an outer rotor (not shown).

The stator 100 includes a stator core 102. The stator core 102 extends in the axial direction z. The stator core 102 comprises stator teeth 112 arranged to project radially outwards from the outer circumference of the stator core 102 in the radial direction r. The teeth are spaced azimuthally from each other in the azimuthal direction *ϕ*.

The stator core extends circumferentially around a heat sink 104, and is arranged to be used with an outer rotor (not shown) arranged around its outer circumference. The stator core 102 is azimuthally and axially symmetric.

The heat sink 104 further includes an electronics housing 106 mounted onto each of its end faces. The electronics housing 106 includes all electronics required to operate the motor (not shown), and protects the electronics from moisture, foreign object damage and corrosion. An axle 108 passes through the centre of each of the electronics housing 106, heat sink 104 and stator core 102, such that they are all coaxially mounted and wires are able to be passed through the interior of the stator core 102 via the axle 108.

The stator teeth 112 are surrounded by bundles of stator windings 110, which are wound around the stator teeth 112 and fill the gaps formed by the stator teeth (not shown).

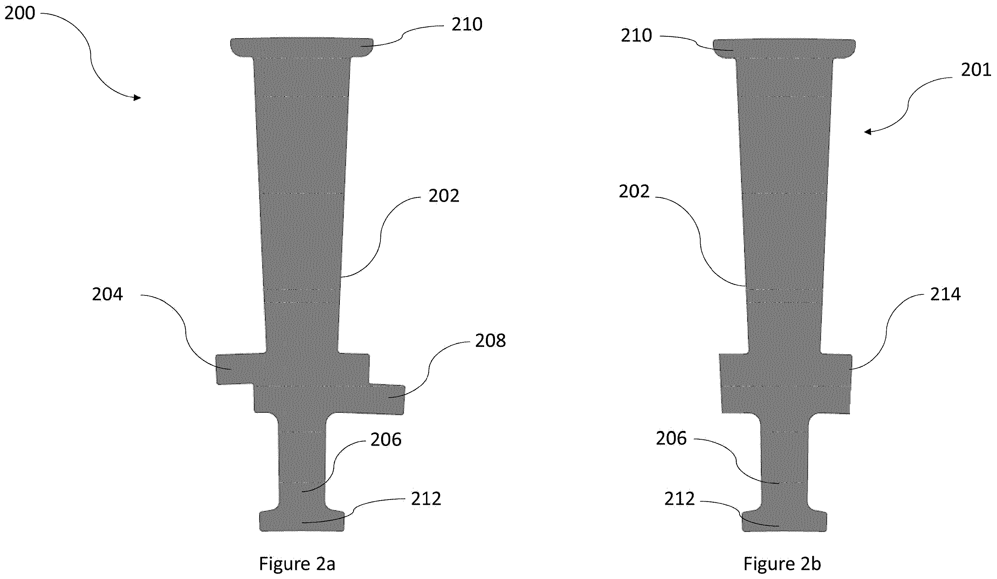

Figure 2a shows an end-on view of an individual first stator tooth 200. The first stator tooth 200 comprises a radially extending first body portion 202, with a distal end flange 210 (distal to the centre of the stator) extending substantially azimuthally.

At a proximal end of the first body portion 202 is a first central flange extending azimuthally. The first central flange comprises a first arm portion 204 comprising a flange extending azimuthally away from the first body portion 202. The first arm portion 204 is substantially 'L' shaped when viewed from an end face of the stator tooth.

The first central flange further comprises a second arm portion 208 comprising a flange extending azimuthally away from the first body portion 202 in the opposite direction to the first arm portion 204. The second arm portion 208 is substantially reverse 'L' shaped when viewed from an end face of the stator tooth, such that the shape of the first and second arm portions 204, 208 are complementary.

A second body portion 206 extends radially from the second arm portion 208, such that it is aligned with the radial extent of the first body portion 202. The width of the second body portion 206 is less than that of the first body portion 202. The length of the second body portion 206 is also substantially less than that of the first body portion 202.

At the end of the second body portion 206 distal from the second arm portion 208 (but proximal to the centre of the stator) is a proximal end flange 212 extending azimuthally from either side of the second body portion 206.

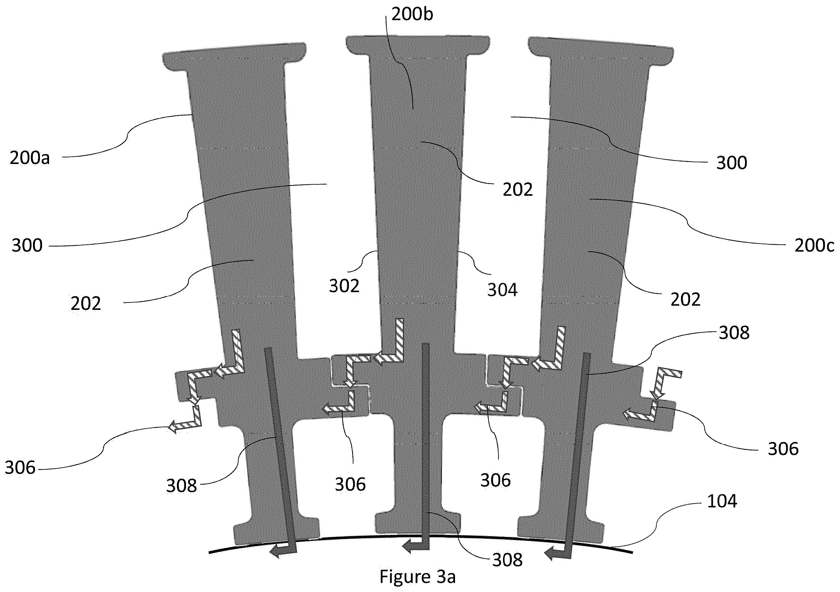

The respective shapes of the first and second arm portions 204, 208 are arranged such that when a plurality of first stator teeth 200 are arranged side-by-side, the first arm portions 204 are able to engage with the second arm portions 208 of the adjacent stator tooth 200, as shown in Figure 3a. This forms a circle of stator teeth 200 and enables continuous stator core to be formed.

The first body portion 202 is tapered, being wider at the end towards the distal end flange 210, and narrower at the end towards the first arm portion 204. The second body portion 206 is also tapered, being narrower at the end towards the proximal end flange 212.

Figure 2b shows an alternative second stator tooth 201 with upper body portion 202, lower body portion 206, proximal end flange 212 and distal end flange 210. The second stator tooth 201 comprises a second central flange 214 extending azimuthally away from both sides of the first body portion 202. The second central flange 214 is the same shape on both sides of the second stator tooth 201.

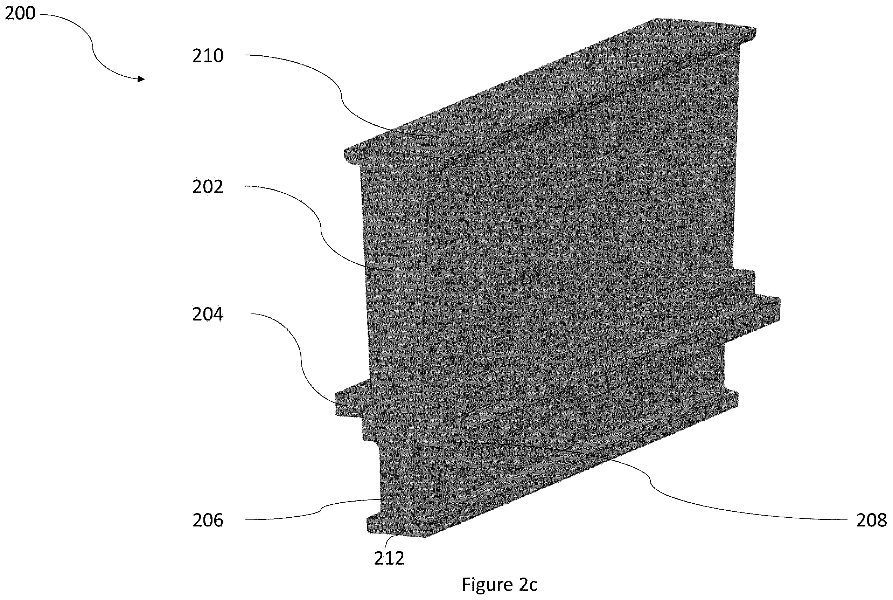

Figure 2c shows a perspective view of the first stator tooth 200 shown in Figure 2a. The first stator tooth 200 extends axially along the desired axial length of the stator core. The first stator tooth 200 may be formed from multiple laminations of the same cross-sectional shape (e.g. that shown in Figure 2a), which are then joined together to form the axially elongated tooth 200 shown in Figure 2c.

The second stator tooth 201 also extends axially along the desired axial length of the stator core (not shown), and may be formed from multiple laminations joined together in the same way as for the first stator tooth 200.

Figure 3a shows a plurality of first stator teeth 200a, 200b, 200c (i.e. as shown in Figures 2a and 2c) arranged side-by-side such that they are adjacent to each other surrounding the outer circumference of the heat sink 104.

The tapered first body portion 202 is such that when the plurality of first stator teeth 200a, 200b, 200c are arranged side-by-side in a circle (i.e. around the outer circumference of the heat sink 104), there is a substantially uniform gap 300 between the first body portion 202 of the stator teeth 200a and 200b, and 200b and 200c respectively. Furthermore, the axially extending surfaces 302, 304 of the first stator teeth 200a, 200b, 200c are substantially parallel.

The first stator teeth 200a, 200b, 200c are arranged such that the first arm portions 204 of each first stator tooth 200b, 200c engage with the respective second arm portions 208 of the adjacent first stator tooth 200a, 200b. This enables electromagnetic flux and heat to be transferred between the teeth via a first route 306.

Additionally, as the first stator teeth 200 are mounted on the heat sink 104, heat and electromagnetic flux are also transferred from each first stator tooth 200 to the heat sink 104 via a second route 308.

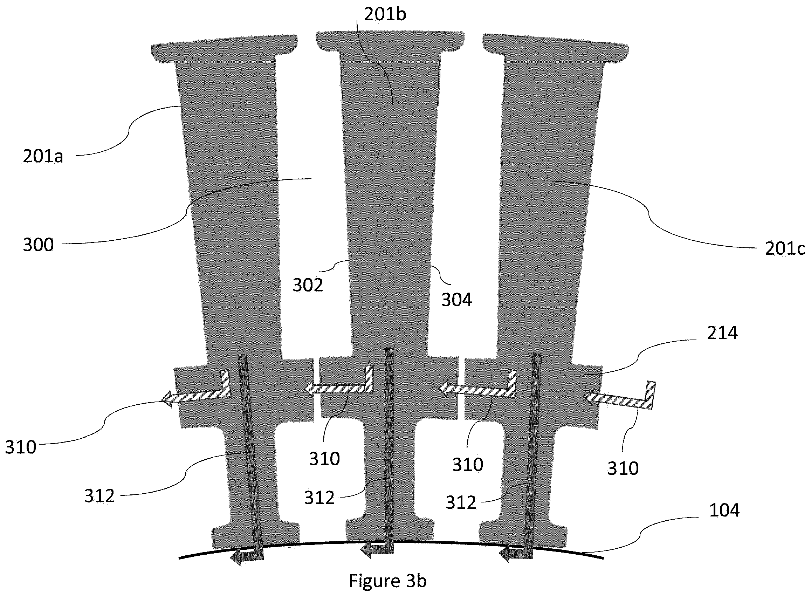

Figure 3b shows a plurality of second stator teeth 201a, 201b, 201c (i.e. as shown in Figure 2b) arranged side-by-side such that they are adjacent to each other surrounding the outer circumference of the heat sink 104. The second stator teeth 201a, 201b, 201c are arranged such that the second central flange 214 of each second stator tooth 201a, 201b, 201c engages with the respective second central flange 214 of the adjacent second stator tooth 201a, 201b, 201c. This enables electromagnetic flux and heat to be transferred between the teeth via a third route 310. Again, as the second stator teeth 201 are mounted on the heat sink 104, heat and electromagnetic flux are also transferred from each second stator tooth 201 to the heat sink 104 via a fourth route 312.

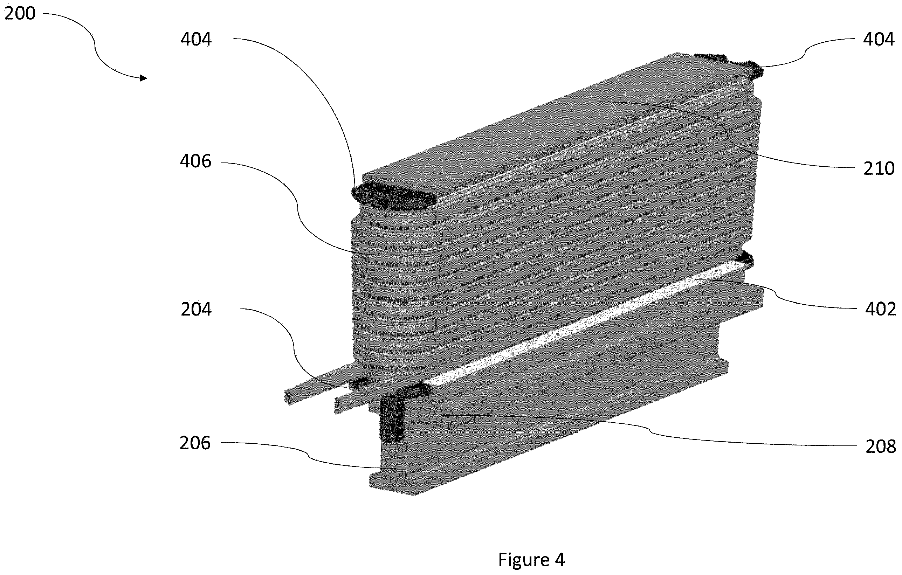

Figure 4 shows a perspective view of the first stator tooth 200 of Figures 2a and 2c, with stator windings 406 wrapped around the first body portion 202 of the first stator tooth 200. The azimuthal extent of the distal end flange 210 and the first arm portion 204 help to hold the stator windings in position.

At each axial end of the first stator tooth 200, a winding guide 404 is positioned on each end face of the first body portion 202. This helps the stator windings 406 to be wound uniformly around the first stator tooth 200. The winding guide 404 also helps to electrically insulate the windings 406 from the first stator tooth 200. The sides of the tooth are also surrounded by a slot liner 402, to electrically insulate the windings 406 from the stator tooth 200. The second stator tooth 201 (shown in Figure 2b) may also have stator windings and winding guides arranged in the same way (not shown).

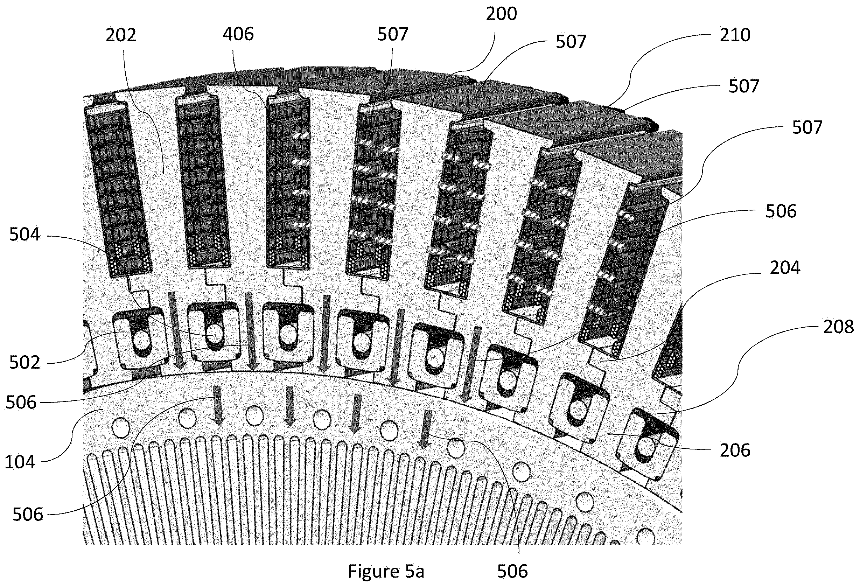

Figure 5a shows an enlarged cross-sectional view of the assembled stator core, formed from a plurality of first stator teeth 200 slotted together, and includes the stator windings 406 between the plurality of first body portions 202. The stator teeth 200 are arranged around the heat sink 104 such that heat is able to transfer from the stator tooth to the heat sink via the first cooling paths 506. There is a uniform gap between the windings of adjacent pairs of first stator teeth 200, such that heat is transferred from the stator windings directly to the air via second cooling paths 507.

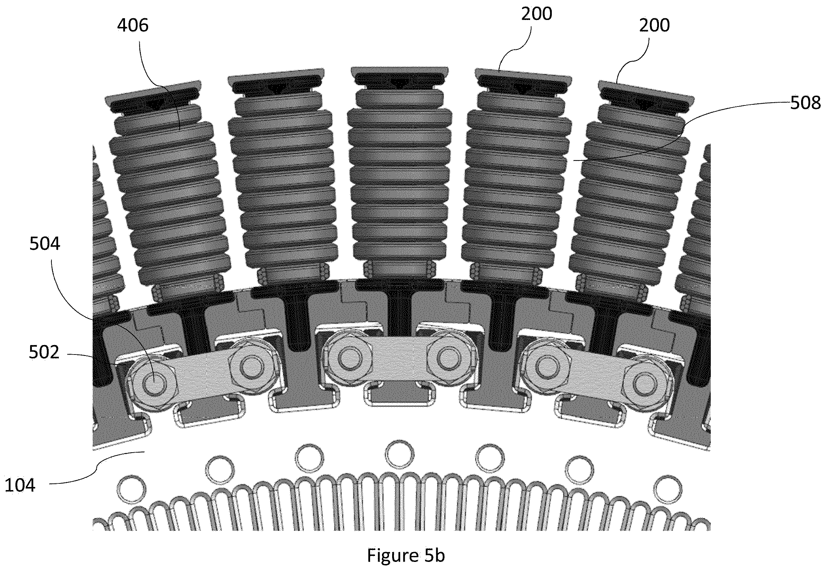

Positioned between pairs of adjacent second body portions 206 is a clamping element 502. The clamping element 502 is part of a clamping mechanism that helps to prevent azimuthal movement of each stator tooth 200, and extends along the axial length of each stator tooth 200. This is supported by the clamping rod 504, which extends substantially along the length of the axial length of each stator tooth 200. The distal end of the clamping rod 504 extends azimuthally (not shown in Figure 5), which helps to prevent the axial movement of the clamping rod 504 and hence the clamping element 502.

As the second body portion 206 of each first stator tooth 200 is tapered, the surfaces between adjacent stator teeth are substantially parallel and hence the gaps between pairs of adjacent second body portions 206 are substantially equal, which helps to ease the positioning of the clamping elements 502 between the pairs of first stator teeth 200. This arrangement is also possible using a plurality of second stator teeth 201 of Figure 2b (not shown). Alternatively, each stator tooth may not be tapered, such that the surfaces between adjacent stator teeth are angled with respect to each other.

Figure 5b shows an end-on view of the assembled stator core shown in Figure 5a, which shows the uniform air gaps 508 between the adjacent pairs of first stator teeth 200 and their associated windings 406. Figure 5b also shows the clamping elements 502 and the clamping rods 504, relative to the heat sink 104.

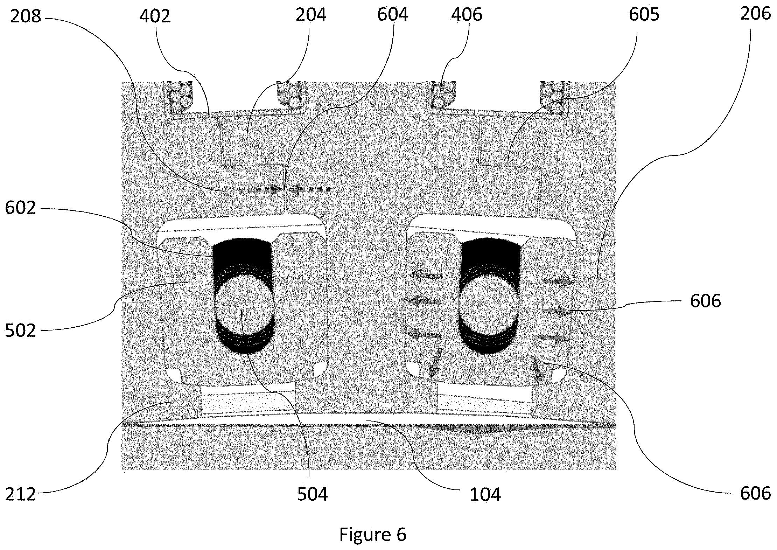

Figure 6 shows an enlarged radial cross-section of the assembled stator core shown in Figure 5b. The clamping element 502 exerts forces 606 on the respective stator tooth 200. The clamping element 502 exerts a radially inward force onto the upper surface of the respective proximal end flanges 212, which holds the stator teeth 200 together. The clamping element 502 also exerts an azimuthal force onto the sides of the respective second body portions 206 of the adjacent stator teeth 200, further helping to maintain the relative positions of the clamping elements 502 and stator teeth 200.

The azimuthal surfaces of the first and second arm portions 204, 208 are substantially in contact with each other when the stator teeth 200 are arranged adjacent to each other.

The azimuthal surfaces of contact between the arm portions 204, 208 provide a path for heat transfer and electromagnetic flux transfer between neighbouring teeth.

Furthermore, whilst the first and second arm portions 204, 208 are arranged to engage, there is a small gap 604 between the radial surfaces of the first and second arm portions 204, 208 (i.e. in the azimuthal direction). There is substantially no gap between the azimuthal surfaces of the first and second arm portions 204, 208 (i.e. in the radial direction) such that there is engagement 605 between adjacent pairs of stator teeth 200.

This small gap 604 allows for larger manufacturing tolerances of the stator assembly. The small gap 604 allows for any small variations in the dimensions of each stator tooth 200 and clamping element 502 whilst still enabling the first and second arm portions 204, 208 to engage. This may help to reduce manufacturing costs. Furthermore, this helps to prevent damage to the stator teeth from excessive rubbing during assembly of the stator core as the small gap 604 absorbs the circular stackup of the adjacent stator teeth 200 and clamping elements 502. The small gap 604 enables a continuous stator core to be formed from the plurality of stator teeth 200 even at the extremes of the manufacturing tolerances.

By allowing for the small gap 604 between stator teeth 200, only the azimuthal surfaces of the first and second arm portions 204, 208 may need to be machined after the stator tooth 200 has been stamped. This machining helps to ensure alignment, and face-to-face contact between the stator teeth, and reduces surface roughness. As the radial surfaces of the first and second arm portions 204, 208 may not need to be machined, the manufacturing cost of the stator assembly may be reduced.

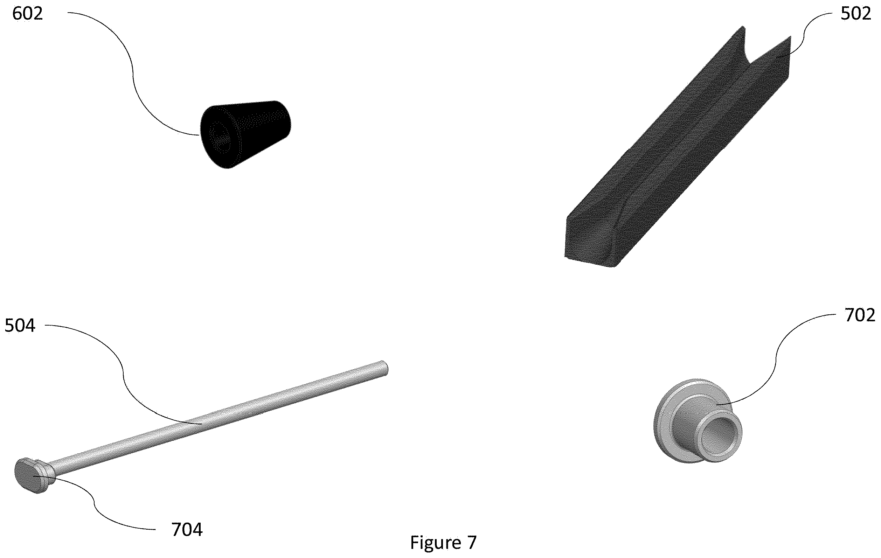

The components used in each clamping mechanism are shown in Figure 7. This includes the clamping element 502, the clamping rod 504, clamping cones 602 and a compression element 702. The clamping rod 504 further comprises an end piece 704 extending perpendicular to the axial extent of the clamping rod 504.

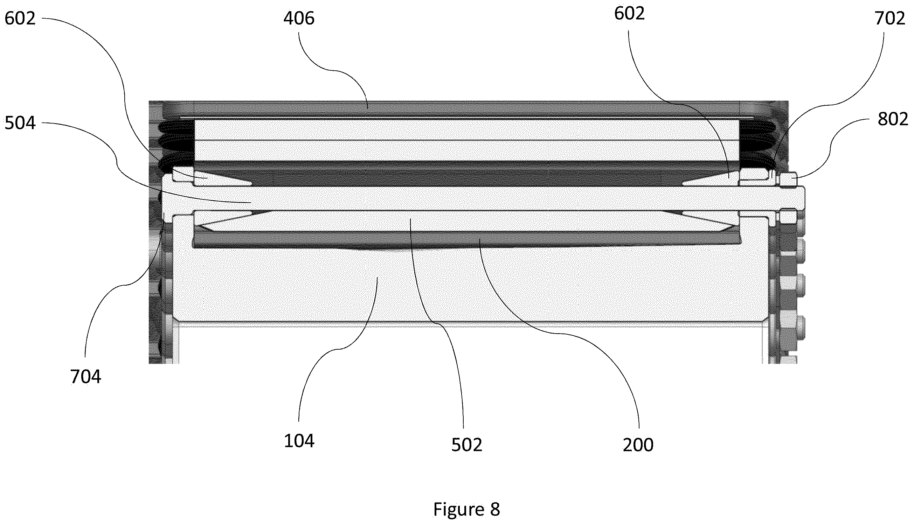

Figure 8 shows an axial cross-section of the stator core, and shows the clamping mechanism in more detail. The clamping element 502 is inserted between the stator teeth 200, and extends along the axial length of the stator tooth. The clamping rod 504 is inserted from the end face of the stator core, and is substantially longer than the axial length of the clamping element 502.

The clamping rod 504 radially extends from an end face of the stator core, and may be secured in place by the compression element 702, and a nut 802 at an end face of the stator core. At the end of the clamping rod 504 distal from the nut 802, the clamping rod 504 radially extends from an end face of the stator core, and includes an end piece extending substantially azimuthally. This end piece engages with the end face of the stator core, and helps to keep the clamping rod in position during assembly of the clamping mechanism. The end piece 704 has a substantially oval cross-section, however other shapes are also envisaged.

The end piece 704 of the clamping rod 504 is shaped such that it is complementary to the end face of the heat sink (not shown), which allows each clamping mechanism to engage with the heat sink 104 to further secure the stator assembly. This also prevents azimuthal rotation of the clamping rod 504 when the respective nut 802 is tightened during assembly.

The clamping rod 504 is surrounded by the pair of hollow clamping cones 602, which are slid onto the clamping rod 504 during assembly. A clamping cone 602 is arranged at each end of the clamping rod 504 and sits between the clamping rod 504 and the clamping element 502. The inner surface of the clamping element 502 is shaped complementary to the outer face of the clamping cone 602 such that the clamping element 502 engages with the pair of clamping cones 602.

The clamping element 502 engages with the second body portions 206 and proximal end flanges 208 of the respective adjacent pair of stator teeth 200. The base of each clamping cone 602 is also in contact with the heat sink 104, such that there is a reaction force transmitted from the heat sink 104 through the clamping cone 602 to the clamping element 504 and hence the respective stator teeth 200.

A torque force is exerted on the nut 802 when it is tightened, and this is transmitted though the compression element 702 as an axial force acting on one end of the clamping cone 602 proximal to the compression element 702. At the other end of the stator core, axially directed reaction forces on the distal end of the clamping rod 504 act on one end of the clamping cone 602 distal from the compression element 702.

The compression and reaction forces are transferred through each of the clamping cones 602 as axial forces acting in opposite directions along the clamping element 502, helping to prevent axial movement of the clamping mechanism.

Furthermore, the compression and reaction forces are also transmitted radially from the compression cones 602 to the clamping element 502, resulting in the radial forces 606 acting on the stator teeth as shown in Figure 6. This helps to bring together the stator teeth 200 and clamp them in place.

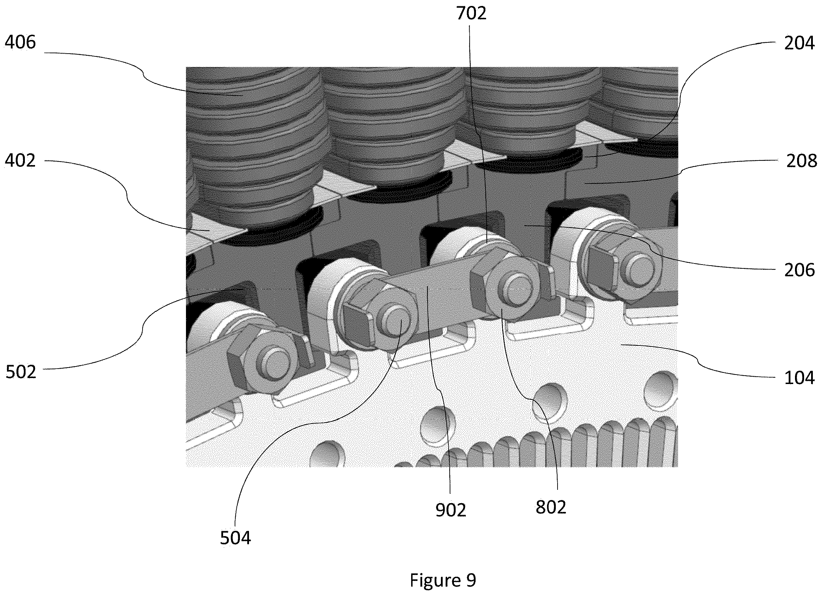

Figure 9 shows an enlarged perspective view of the assembled stator. The clamping mechanism 502 is arranged coaxial to the clamping rod 504, where the end of the clamping rod 504 engages with the front face of the heat sink 104 such that the clamping mechanism 502 is attached to the heat sink 104.

Additionally, pairs of adjacent clamping mechanisms 502 are connected by a plate 902 mounted over the heat sink 104 to the pairs of respective clamping rods 504, wherein the plate 902 is secured by the nut 802. Each nut 802 is attached to the respective clamping rod 504 by threaded engagement (not shown). Therefore, each clamping mechanism and respective pairs adjacent stator teeth are clamped to the heat sink 104, and tightening the nut 802 further secures the clamping mechanism and hence respective adjacent pair of stator teeth 200 to the heat sink 104. This further helps to prevent axial and azimuthal movement of each of the stator teeth 200, as well as securing the position of the heat sink 104 relative to the stator teeth.

In order to prevent loosening of a pair of the nuts 802 and hence misalignment of adjacent stator teeth 200, the ends of the plate 902 may be bent such that they are in contact with one of the hexagonal faces of each nut 802. This secures the nuts 802 in place by preventing their unwanted rotation.

## Claims

1. A clamping mechanism for a stator assembly (100) which comprises a plurality of stator teeth (112; 200; 201); the clamping mechanism comprising:
at least one compression element (702);
wherein the clamping mechanism is configured to be arrangeable between an adjacent pair of stator teeth (112; 200; 201);
wherein the clamping mechanism is configured to extend along the axial extent of the adjacent pair of stator teeth (112; 200; 201);
wherein the clamping mechanism is arranged to convert an axially inward force applied by the clamping mechanism to a radially inward force on the adjacent pair of stator teeth (112; 200; 201); and
wherein each compression element (702) is arranged to convert an axially inward force exerted on the compression elements (702) into the radially inward force on the respective adjacent pair of stator teeth (112; 200; 201);
**characterised in that** each compression element (702) is frustoconical in shape.

2. A stator assembly (100) for an electrical machine, wherein the stator assembly (100) extends azimuthally around an axis, wherein the stator assembly (100) comprises:
a plurality of stator teeth (112; 200; 201) extending radially;
wherein the plurality of stator teeth (112; 200; 201) are spaced azimuthally; and
wherein the plurality of stator teeth (112; 200; 201) extend along a direction parallel to the axis of the stator assembly (100);
wherein each stator tooth (112; 200; 201) is individually formed and comprises a radially extended body portion;
wherein the radially extended body portion comprises:
an upper body portion (202);
a lower body portion (206); and
a central flange (204, 208; 214) located radially along the length of the body portion between the upper body portion (202) and the lower body portion (206);
wherein the central flange (214) is arranged to engage with the central flange (204, 208; 214) of an adjacent stator tooth (112; 200; 201);
wherein the radially innermost end of each lower body portion (206) comprises a lower flange (212);
wherein the stator assembly (100) further comprises:
a plurality of clamping mechanisms, wherein each of the plurality of clamping mechanisms is the clamping mechanism according to claim 1;
wherein each clamping mechanism is arranged between an adjacent pair of stator teeth (112; 200; 201);
wherein each clamping mechanism extends axially between the lower body portions (206) of the adjacent pair of stator teeth (112; 200; 201);
wherein each clamping mechanism is arranged to engage with the radially innermost end of the body portions of the adjacent pair of stator teeth (112; 200; 201).

3. The stator assembly as claimed in claim 2, wherein the radially innermost end of each lower body portion comprises a lower flange arranged to engage with the respective clamping mechanism.

4. The stator assembly (100) as claimed in claim 2, wherein each clamping mechanism comprises a clamping element (502) arranged to extend longitudinally along the axis of the stator assembly (100).

5. The stator assembly (100) as claimed in claim 4, wherein the stator assembly (100) comprises a plurality of nuts (802), wherein each nut (802) is arranged to engage with a respective clamping mechanism to increase the axially inward force when the nut (802) is tightened.

6. The stator assembly (100) as claimed in claim 5, wherein the stator assembly (100) comprises a plurality of plates (902) arranged at the end face of the stator assembly (100), wherein each plate (902) is arranged to connect a respective adjacent pair of clamping mechanisms.

7. The stator assembly (100) as claimed in claim 6, wherein each plate (902) is arranged between the respective clamping mechanism and its respective nut (802).

8. **The** stator assembly (100) as claimed in any one of claims 2 to 7, wherein the shape of the central flange (204, 208; 214) on one side of the body portion is complementary to the shape of the central flange (204, 208; 214) on the opposite side of the body portion of an adjacent stator tooth (112; 200; 201) and optionally wherein the central flange (204, 208; 214) of each stator tooth (112; 200; 201) is arranged to engage with the central flange (204, 208; 214) of the adjacent stator tooth (112; 200; 201).

9. **The** stator assembly (100) as claimed in claim 8, wherein the shape of the central flange (204, 208) comprises a plurality of steps when viewed from a radial cross-section of the stator assembly (100).

10. **The** stator assembly (100) as claimed in claim 9, wherein a first manufacturing tolerance of a first face of the plurality of steps perpendicular to the body portion is less than a second manufacturing tolerance of a second face of the plurality of steps parallel to the body portion.

11. **The** stator assembly (100) as claimed in any one of claims 2 to 10, wherein the azimuthal extent of the central flange (204, 208; 214) is substantially less than the radial extent of the body portion.

12. **The** stator assembly (100) as claimed in any one of claims 2 to 11, wherein the body portion of each stator tooth (112; 200; 201) is tapered at substantially the same angle.

13. The stator assembly (100) as claimed in any one of claims 2 to 12, wherein the upper body portion (202) of each stator tooth (112; 200; 201) further comprises an upper flange (210) projecting azimuthally from the stator tooth (112; 200; 201) at an end distal from the centre of the stator assembly (100).

14. A method of assembling a stator assembly (100) for an electrical machine, wherein the stator assembly (100) extends azimuthally around an axis, the method comprising:
individually forming a plurality of separate stator teeth (112; 200; 201);
wherein each stator tooth (112; 200; 201) comprises:
a radially extended body portion;
wherein each radially extended body portion comprises:
an upper body portion (202);
a lower body portion (206); and
a central flange (204, 208; 214) located radially along the length of the body portion between the upper body portion (202) and lower body portion (206);
wherein the radially innermost end of each lower body
portion (206) comprises a lower flange (212);
wherein the method further comprises:
assembling the stator teeth (112; 200; 201) such that they are spaced azimuthally, extend radially, and extend along a direction parallel to the axis of the stator assembly (100);
engaging the central flange (204, 208; 214) of each stator tooth (112; 200; 201) with the central flange (204, 208; 214) of the adjacent stator tooth (112; 200; 201);
arranging a plurality of clamping mechanisms such that there is a clamping mechanism between each adjacent pair of stator teeth (112; 200; 201);
wherein each clamping mechanism extends axially between the lower body portions (206) of the respective adjacent pair of stator teeth (112; 200; 201);
wherein each clamping mechanism comprises at least one compression element (702);
wherein each compression element (702) is frustoconical in shape;
engaging the clamping mechanism with the radially innermost end of the body portions of the adjacent pair of stator teeth (112; 200; 201);
wherein each clamping mechanism exerts a radially inward force on the respective adjacent pair of stator teeth (112; 200; 201), holding the stator teeth (112; 200; 201) together; and
converting an axially inward force exerted on the at least one compression element (702) into the radially inward force on the respective adjacent pair of stator teeth (112; 200; 201); and
engaging the radially lower flange with the respective clamping mechanism.

15. The method as claimed in claim 14, wherein the method comprises:
tightening a nut (802) at the end of each clamping mechanism so to convert an axially inward force on the clamping mechanism into the radially inward force.

## Patentansprüche

1. Klemmmechanismus für eine Statorbaugruppe (100), die eine Vielzahl von Statorzähnen (112; 200; 201) umfasst; der Klemmmechanismus umfasst:
mindestens ein Kompressionselement (702);
wobei der Klemmmechanismus so konfiguriert ist, dass er zwischen einem benachbarten Paar von Statorzähnen (112; 200; 201) angeordnet werden kann;
wobei der Klemmmechanismus so konfiguriert ist, dass er sich entlang der axialen Ausdehnung des benachbarten Paares von Statorzähnen (112; 200; 201) erstreckt;
wobei der Klemmmechanismus so angeordnet ist, dass eine vom Klemmmechanismus ausgeübte axial nach innen gerichtete Kraft in eine radial nach innen gerichtete Kraft auf das benachbarte Paar von Statorzähnen (112; 200; 201) umgewandelt wird; und
wobei jedes Kompressionselement (702) so angeordnet ist, dass eine axial nach innen gerichtete Kraft, die auf die Kompressionselemente (702) wirkt, in eine radial nach innen gerichtete Kraft auf das jeweils benachbarte Paar von Statorzähnen (112; 200; 201) umgewandelt wird;
**dadurch gekennzeichnet, dass** jedes Kompressionselement (702) kegelstumpfförmig ist.

2. Statorbaugruppe (100) für eine elektrische Maschine, wobei sich die Statorbaugruppe (100) azimutal um eine Achse erstreckt, wobei die Statorbaugruppe (100) Folgendes umfasst:
eine Vielzahl von Statorzähnen (112; 200; 201), die sich radial erstrecken;
wobei die Vielzahl von Statorzähnen (112; 200; 201) azimutal beabstandet ist; und
wobei sich die Vielzahl von Statorzähnen (112; 200; 201) entlang einer Richtung parallel zur Achse der Stator-Baugruppe (100) erstreckt;
wobei jeder Statorzahn (112; 200; 201) einzeln geformt ist und einen radial ausgedehnten Körperabschnitt aufweist;
wobei der radial ausgedehnte Körperabschnitt Folgendes umfasst:
einen oberen Körperabschnitt (202);
einen unteren Körperabschnitt (206); und
einen mittleren Flansch (204, 208; 214), der radial entlang der Länge des Körperabschnitts zwischen dem oberen Körperabschnitt (202) und dem unteren Körperabschnitt (206) angeordnet ist;
wobei der mittlere Flansch (214) so angeordnet ist, dass er mit dem mittleren Flansch (204, 208, 214) eines benachbarten Statorzahns (112, 200, 201) in Eingriff steht;
wobei das radial innerste Ende jedes unteren Körperabschnitts (206) einen unteren Flansch (212) aufweist;
wobei die Statorbaugruppe (100) ferner Folgendes umfasst:
eine Vielzahl von Klemmmechanismen, wobei jede der Vielzahl von Klemmmechanismen ein Klemmmechanismus nach Anspruch 1 ist;
wobei jeder Klemmmechanismus zwischen einem benachbarten Paar von Statorzähnen (112; 200; 201) angeordnet ist;
wobei sich jeder Klemmmechanismus axial zwischen den unteren Körperabschnitten (206) des benachbarten Paares von Statorzähnen (112; 200; 201) erstreckt;
wobei jeder Klemmmechanismus so angeordnet ist, dass er mit dem radial innersten Ende der Körperabschnitte des benachbarten Paares von Statorzähnen (112; 200; 201) in Eingriff kommt.

3. Statorbaugruppe nach Anspruch 2, wobei das radial innerste Ende jedes unteren Körperabschnitts einen unteren Flansch aufweist, der mit dem jeweiligen Klemmmechanismus in Eingriff steht.

4. Statorbaugruppe (100) nach Anspruch 2, wobei jeder Klemmmechanismus ein Klemmelement (502) umfasst, das sich in Längsrichtung entlang der Achse der Statorbaugruppe (100) erstreckt.

5. Statorbaugruppe (100) nach Anspruch 4, wobei die Statorbaugruppe (100) eine Vielzahl von Muttern (802) umfasst, wobei jede Mutter (802) so angeordnet ist, dass sie mit einem jeweiligen Klemmmechanismus in Eingriff steht, um die axial nach innen gerichtete Kraft beim Anziehen der Mutter (802) zu erhöhen.

6. Statorbaugruppe (100) nach Anspruch 5, wobei die Statorbaugruppe (100) eine Vielzahl von Platten (902) umfasst, die an der Endfläche der Statorbaugruppe (100) angeordnet sind, wobei jede Platte (902) so angeordnet ist, dass sie jeweils ein benachbartes Paar von Klemmmechanismen verbindet.

7. Statorbaugruppe (100) nach Anspruch 6, wobei jede Platte (902) zwischen dem jeweiligen Klemmmechanismus und ihrer jeweiligen Mutter (802) angeordnet ist.

8. Statorbaugruppe (100) nach einem der Ansprüche 2 bis 7, wobei die Form des mittleren Flansches (204, 208, 214) auf einer Seite des Körperabschnitts komplementär zur Form des mittleren Flansches (204, 208, 214) auf der gegenüberliegenden Seite des Körperabschnitts eines benachbarten Statorzahns (112, 200, 201) ist und optional der mittlere Flansch (204, 208, 214) jedes Statorzahns (112, 200, 201) so angeordnet ist, dass er mit dem mittleren Flansch (204, 208, 214) des benachbarten Statorzahns (112, 200, 201) in Eingriff steht.

9. Statorbaugruppe (100) nach Anspruch 8, wobei die Form des mittleren Flansches (204, 208) beim Betrachten im radialen Querschnitt der Statorbaugruppe (100) eine Vielzahl von Stufen umfasst.

10. Statorbaugruppe (100) nach Anspruch 9, wobei eine erste Fertigungstoleranz einer ersten Fläche der Vielzahl von Stufen, die senkrecht zum Körperabschnitt verlaufen, kleiner ist als eine zweite Fertigungstoleranz einer zweiten Fläche der Vielzahl von Stufen, die parallel zum Körperabschnitt verlaufen.

11. Statorbaugruppe (100) nach einem der Ansprüche 2 bis 10, wobei die azimutale Ausdehnung des mittleren Flansches (204, 208; 214) wesentlich geringer ist als die radiale Ausdehnung des Körperabschnitts.

12. Statorbaugruppe (100) nach einem der Ansprüche 2 bis 11, wobei der Körperabschnitt jedes Statorzahns (112; 200; 201) im Wesentlichen im gleichen Winkel verjüngt ist.

13. Statorbaugruppe (100) nach einem der Ansprüche 2 bis 12, wobei der obere Körperabschnitt (202) jedes Statorzahns (112; 200; 201) ferner einen oberen Flansch (210) aufweist, der azimutal vom Statorzahn (112; 200; 201) an einem Ende distal von der Mitte der Statorbaugruppe (100) absteht.

14. Verfahren zum Zusammenbau einer Statorbaugruppe (100) für eine elektrische Maschine, wobei sich die Statorbaugruppe (100) azimutal um eine Achse erstreckt, wobei das Verfahren umfasst:
einzelnes Ausbilden einer Vielzahl von separaten Statorzähnen (112; 200; 201);
wobei jeder Statorzahn (112; 200; 201) Folgendes umfasst:
einen radial ausgedehnten Körperabschnitt;
wobei jeder radial ausgedehnte Körperabschnitt Folgendes umfasst:
einen oberen Körperabschnitt (202);
einen unteren Körperabschnitt (206); und
einen mittleren Flansch (204, 208; 214), der radial entlang der Länge des Körperabschnitts zwischen dem oberen Körperabschnitt (202) und dem unteren Körperabschnitt (206) angeordnet ist;
wobei das radial innerste Ende jedes unteren Körperabschnitts (206) einen unteren Flansch (212) aufweist;
wobei das Verfahren ferner umfasst:
Anordnen der Statorzähne (112; 200; 201) derart, dass sie azimutal beabstandet sind, sich radial erstrecken und in einer Richtung parallel zur Achse der Statorbaugruppe (100) verlaufen;
Eingriff des Mittelflansches (204, 208; 214) jedes Statorzahns (112; 200; 201) mit dem Mittelflansch (204, 208; 214) des benachbarten Statorzahns (112; 200; 201);
Anordnen einer Vielzahl von Klemmmechanismen derart, dass sich zwischen jedem benachbarten Paar von Statorzähnen (112; 200; 201) ein Klemmmechanismus befindet;
wobei sich jeder Klemmmechanismus axial zwischen den unteren Körperabschnitten (206) des jeweiligen benachbarten Paares von Statorzähnen (112; 200; 201) erstreckt;
wobei jeder Klemmmechanismus mindestens ein Kompressionselement (702) umfasst;
wobei jedes Kompressionselement (702) kegelstumpfförmig ist;
Eingriff des Klemmmechanismus mit dem radial innersten Ende der Körperabschnitte des benachbarten Statorzahnpaares (112; 200; 201);
wobei jeder Klemmmechanismus eine radial nach innen gerichtete Kraft auf das jeweilige benachbarte Paar von Statorzähnen (112; 200; 201) ausübt und die Statorzähne (112; 200; 201) zusammenhält; und
Umwandlung einer axial nach innen gerichteten Kraft, die auf das mindestens eine Kompressionselement (702) wirkt, in die radial nach innen gerichtete Kraft auf das jeweils benachbarte Paar von Statorzähnen (112; 200; 201); und
Eingriff des radial unteren Flansches in den jeweiligen Klemmmechanismus.

15. Verfahren nach Anspruch 14, wobei das Verfahren Folgendes umfasst:
durch Festziehen einer Mutter (802) am Ende jedes Klemmmechanismus, um eine axial nach innen gerichtete Kraft auf den Klemmmechanismus in eine radial nach innen gerichtete Kraft umzuwandeln.

## Revendications

1. Mécanisme de serrage pour un ensemble stator (100) qui comprend une pluralité de dents de stator (112 ; 200 ; 201) ; le mécanisme de serrage comprenant :
au moins un élément de compression (702) ;
dans lequel le mécanisme de serrage est configuré pour pouvoir être agencé entre une paire adjacente de dents de stator (112 ; 200 ; 201) ;
dans lequel le mécanisme de serrage est configuré pour s'étendre le long de l'étendue axiale de la paire adjacente de dents de stator (112 ; 200 ; 201) ;
dans lequel le mécanisme de serrage est agencé pour convertir une force axialement vers l'intérieur appliquée par le mécanisme de serrage en une force radialement vers l'intérieur sur la paire adjacente de dents de stator (112 ; 200 ; 201) ; et
dans lequel chaque élément de compression (702) est agencé pour convertir une force axialement vers l'intérieur exercée sur les éléments de compression (702) en une force radialement vers l'intérieur sur la paire adjacente respective de dents de stator (112 ; 200 ; 201) ;
**caractérisé en ce que** chaque élément de compression (702) est de forme tronconique.

2. Ensemble stator (100) pour une machine électrique, dans lequel l'ensemble stator (100) s'étend de manière azimutale autour d'un axe, dans lequel l'ensemble stator (100) comprend :
une pluralité de dents de stator (112 ; 200 ; 201) s'étendant radialement ;
dans lequel la pluralité de dents de stator (112 ; 200 ; 201) sont espacées de manière azimutale ; et
dans lequel la pluralité de dents de stator (112 ; 200 ; 201) s'étendent le long d'une direction parallèle à l'axe de l'ensemble stator (100) ;
dans lequel chaque dent de stator (112 ; 200 ; 201) est formée individuellement et comprend une partie corps étendue radialement ;
dans lequel la partie corps étendue radialement comprend :
une partie supérieure de corps (202) ;
une partie inférieure de corps (206) ; et
une bride centrale (204, 208 ; 214) située radialement le long de la longueur de la partie corps entre la partie supérieure de corps (202) et la partie inférieure de corps (206) ;
dans lequel la bride centrale (214) est agencée pour entrer en prise avec la bride centrale (204, 208 ; 214) d'une dent de stator (112; 200 ; 201) adjacente ;
dans lequel l'extrémité radialement la plus intérieure de chaque partie inférieure de corps (206) comprend une bride inférieure (212) ;
dans lequel l'ensemble stator (100) comprend en outre :
une pluralité de mécanismes de serrage, dans lequel chacun de la pluralité de mécanismes de serrage est le mécanisme de serrage selon la revendication 1 ;
dans lequel chaque mécanisme de serrage est agencé entre une paire adjacente de dents de stator (112 ; 200 ; 201) ;
dans lequel chaque mécanisme de serrage s'étend axialement entre les parties inférieures de corps (206) de la paire adjacente de dents de stator (112 ; 200 ; 201) ;
dans lequel chaque mécanisme de serrage est agencé pour entrer en prise avec l'extrémité radialement la plus intérieure des parties corps de la paire adjacente de dents de stator (112 ; 200 ; 201).

3. Ensemble stator selon la revendication 2, dans lequel l'extrémité radialement la plus intérieure de chaque partie inférieure de corps comprend une bride inférieure agencée pour entrer en prise avec le mécanisme de serrage respectif.

4. Ensemble stator (100) selon la revendication 2, dans lequel chaque mécanisme de serrage comprend un élément de serrage (502) agencé pour s'étendre longitudinalement le long de l'axe de l'ensemble stator (100).

5. Ensemble stator (100) selon la revendication 4, dans lequel l'ensemble stator (100) comprend une pluralité d'écrous (802), dans lequel chaque écrou (802) est agencé pour entrer en prise avec un mécanisme de serrage respectif afin d'augmenter la force axialement vers l'intérieur lorsque l'écrou (802) est resserré.

6. Ensemble stator (100) selon la revendication 5, dans lequel l'ensemble stator (100) comprend une pluralité de plaques (902) agencées au niveau de la face d'extrémité de l'ensemble stator (100), dans lequel chaque plaque (902) est agencée pour relier une paire adjacente respective de mécanismes de serrage.

7. Ensemble stator (100) selon la revendication 6, dans lequel chaque plaque (902) est agencée entre le mécanisme de serrage respectif et son écrou (802) respectif.

8. Ensemble stator (100) selon l'une quelconque des revendications 2 à 7, dans lequel la forme de la bride centrale (204, 208 ; 214) sur un côté de la partie corps est complémentaire à la forme de la bride centrale (204, 208 ; 214) sur le côté opposé de la partie corps d'une dent de stator (112 ; 200 ; 201) adjacente et, éventuellement, dans lequel la bride centrale (204, 208 ; 214) de chaque dent de stator (112 ; 200 ; 201) est agencée pour entrer en prise avec la bride centrale (204, 208 ; 214) de la dent de stator (112 ; 200 ; 201) adjacente.

9. Ensemble stator (100) selon la revendication 8, dans lequel la forme de la bride centrale (204, 208) comprend une pluralité de marches lorsqu'elle est vue à partir d'une section transversale radiale de l'ensemble stator (100).

10. Ensemble stator (100) selon la revendication 9, dans lequel une première tolérance de fabrication d'une première face de la pluralité de marches perpendiculaire à la partie corps est inférieure à une seconde tolérance de fabrication d'une seconde face de la pluralité de marches parallèle à la partie corps.

11. Ensemble stator (100) selon l'une quelconque des revendications 2 à 10, dans lequel l'étendue azimutale de la bride centrale (204, 208 ; 214) est sensiblement inférieure à l'étendue radiale de la partie corps.

12. Ensemble stator (100) selon l'une quelconque des revendications 2 à 11, dans lequel la partie corps de chaque dent de stator (112 ; 200 ; 201) est conique à un angle sensiblement identique.

13. Ensemble stator (100) selon l'une quelconque des revendications 2 à 12, dans lequel la partie supérieure de corps (202) de chaque dent de stator (112 ; 200 ; 201) comprend en outre une bride supérieure (210) faisant saillie de manière azimutale de la dent de stator (112 ; 200 ; 201) au niveau d'une extrémité distale du centre de l'ensemble stator (100).

14. Procédé d'assemblage d'un ensemble stator (100) pour une machine électrique, dans lequel l'ensemble stator (100) s'étend de manière azimutale autour d'un axe, le procédé comprenant :
la formation individuelle d'une pluralité de dents de stator (112 ; 200 ; 201) séparées ;
dans lequel chaque dent de stator (112 ; 200 ; 201) comprend :
une partie corps étendue radialement ;
dans lequel chaque partie corps étendue radialement comprend :
une partie supérieure de corps (202) ;
une partie inférieure de corps (206) ; et
une bride centrale (204, 208 ; 214) située radialement le long de la longueur de la partie corps entre la partie supérieure de corps (202) et la partie inférieure de corps (206) ;
dans lequel l'extrémité radialement la plus intérieure de chaque partie inférieure de corps (206) comprend une bride inférieure (212) ;
dans lequel le procédé comprend en outre :
l'assemblage des dents de stator (112 ; 200 ; 201) de telle sorte qu'elles sont espacées de manière azimutale, s'étendent radialement, et s'étendent le long d'une direction parallèle à l'axe de l'ensemble stator (100) ;
la mise en prise de la bride centrale (204, 208 ; 214) de chaque dent de stator (112 ; 200 ; 201) avec la bride centrale (204, 208 ; 214) de la dent de stator (112 ; 200 ; 201) adjacente ;
l'agencement d'une pluralité de mécanismes de serrage de telle sorte qu'il y a un mécanisme de serrage entre chaque paire adjacente de dents de stator (112 ; 200 ; 201) ;
dans lequel chaque mécanisme de serrage s'étend axialement entre les parties inférieures de corps (206) de la paire adjacente respective de dents de stator (112 ; 200 ; 201) ;
dans lequel chaque mécanisme de serrage comprend au moins un élément de compression (702) ;
dans lequel chaque élément de compression (702) est de forme tronconique ;
la mise en prise du mécanisme de serrage avec l'extrémité radialement la plus intérieure des parties corps de la paire adjacente de dents de stator (112 ; 200 ; 201) ;
dans lequel chaque mécanisme de serrage exerce une force radialement vers l'intérieur sur la paire adjacente respective de dents de stator (112 ; 200 ; 201), maintenant les dents de stator (112 ; 200 ; 201) ensemble ; et
la conversion d'une force axialement vers l'intérieur exercée sur l'au moins un élément de compression (702) en la force radialement vers l'intérieur sur la paire adjacente respective de dents de stator (112 ; 200 ; 201) ; et
la mise en prise de la bride radialement inférieure avec le mécanisme de serrage respectif.

15. Procédé selon la revendication 14, dans lequel le procédé comprend :
le resserrage d'un écrou (802) au niveau de l'extrémité de chaque mécanisme de serrage afin de convertir une force axialement vers l'intérieur sur le mécanisme de serrage en la force radialement vers l'intérieur.
